Europäisches Patentamt

European Patent Office

Office européen des brevets

(19)

(11) **EP 0 967 784 A2**

(12) **EUROPEAN PATENT APPLICATION**

(43) Date of publication:
**29.12.1999 Bulletin 1999/52**

(51) Int Cl.$^6$: **H04N 1/32**

(21) Application number: **99305013.7**

(22) Date of filing: **25.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.06.1998 KR 9824149**

(71) Applicant: **Daewoo Telecom Ltd.
Incheon 404-250 (KR)**

(72) Inventor: **Kim, Won Kyu
Yunsoo-ku, Incheon 406-130 (KR)**

(74) Representative: **Neobard, William John et al
Page White & Farrer
54 Doughty Street
London WC1N 2LS (GB)**

(54) **Apparatus for converting print data format**

(57)     The present invention relates to an apparatus for converting print data format which converts a horizontal data format adapted to, for example a thermal print head of facsimile device, into a vertical data format adapted to an ink jet or bubble jet printer. The apparatus for converting print data format which converts a horizontal data format for printing N-byte data per a line horizontally into a vertical data format for printing M-byte data vertically at a time, the apparatus comprising: a data storing means including a first storing area wherein horizontal data are stored in sequence of the address and a second storing area wherein format-converted vertical data are stored; an address generating means for generating read address data for reading K-byte data from the first storing area by adding a source address offset value to predetermined read start address data, the value corresponding to the number of N, and for generating write address data for writing K-byte data in the second storing area by adding a destination address offset value to predetermined write start address data, the value corresponding to the number of M, during on cycle of DMA operations; a DMA control means, including data format converting means for generating K-byte data to be stored in the second storing area by grouping the K-byte data read from the data memory means in the same bits and a timer for setting the cycle of DMA operations, for outputting a bus request signal to CPU corresponding to a signal output from the timer and for executing the data format converting operations by controlling the address generating means if a bus grant signal is input from CPU; a counting means for outputting an interrupt signal if the number of output times of the bus request signal from the DMA control means becomes M; and a CPU for registering the read start address data, write start address data, source address offset value and destination address offset value and for controlling the driving operations of the timer.

FIG. 4

**Description**

BACKGROUND OF THE INVENTION

Field of the Invention

The present invention relates to an apparatus for converting print data format which converts a horizontal data format adapted to, for example a thermal print head of facsimile device, into a vertical data format adapted to an ink jet or bubble jet printer.

Discussion of Related Art

Facsimile devices are widely used for mutually transmitting and receiving document information, And currently, internet facsimile devices for transmitting and receiving data through internet network, instead of conventional PSTN network, have been developed and popularized.

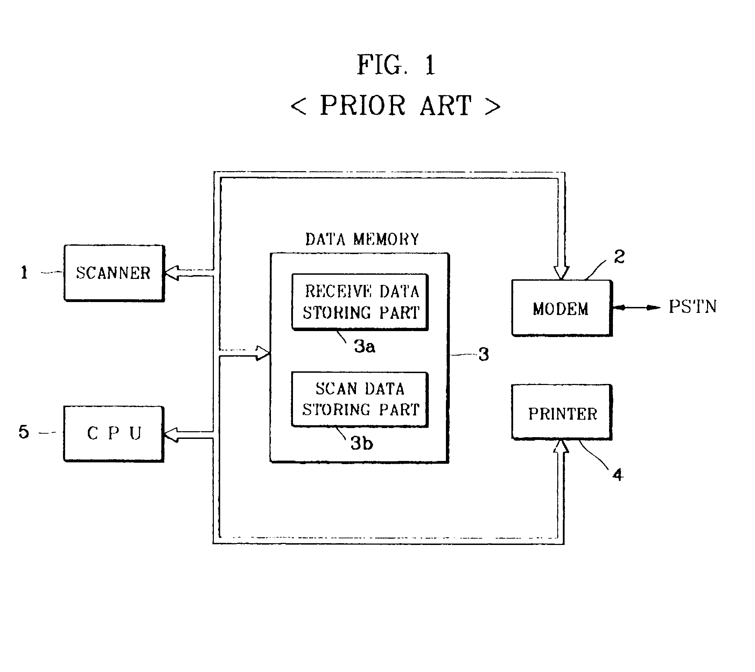

Fig. 1 is a block diagram showing a conventional facsimile device currently available comprising a scanner 1 for scanning document images and outputting corresponding image data, a modem 2 connected to a PSTN network or internet network for transmitting and receiving data to and from facsimile devices or the other image data transmit/receive apparatuses, a data memory 3 including a receive data storing part 3a for storing image data received through the modem 2 and a scan data storing part 3b for storing image data scanned by virtue of the scanner 1, and a printer 4 for printing receive data and scan data stored in the data memory 3. And CPU 5 is further provided for controlling the overall facsimile device. In particular, CPU 5 compresses image data, scanned by the scanner 1, pursuant to a predetermined algorithm and outputs them to the modem 2. And CPU 5 further decompresses image data, received from the opposite facsimile device or image data transmit/receive apparatus through the modem 2, pursuant to a predetermined algorithm, and stores them in the data memory 3 to be output through the printer 4.

In the above configuration, when transmitting document data, after scan data scanned by the scanner 1 are stored in the scan data storing part 3b of the data memory 3, CPU 5 compresses image data stored in the scan data storing part 3b and outputs them to the modem 2. When receiving document data, after image data received through the modem 2 are stored in the receive data storing part 3a of the data memory 3, CPU 5 decompresses receive data stored in the receive data storing part 3a and outputs them to the printer 4. Moreover, in case that the user inputs print commands for image data scanned by virtue of the scanner 1, CPU 5 outputs image data input from the scanner 1 in writing, by forwarding image data stored in the scan data storing part 3b of the data memory 3 to the printer 4.

Meanwhile, in the above configuration, the printer 4 employs a thermal print head in general comprising a plurality of heating elements arranged horizontally. Accordingly, in the conventional facsimile device, both image scan data output from the scanner 1 and image data transmitted and received through the modem 2 have a horizontal data format, respectively.

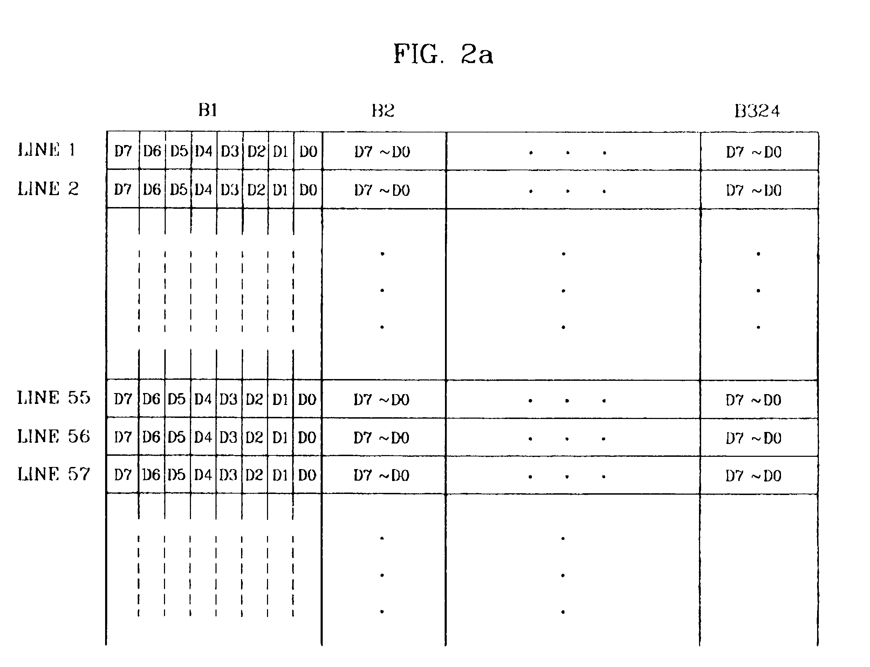

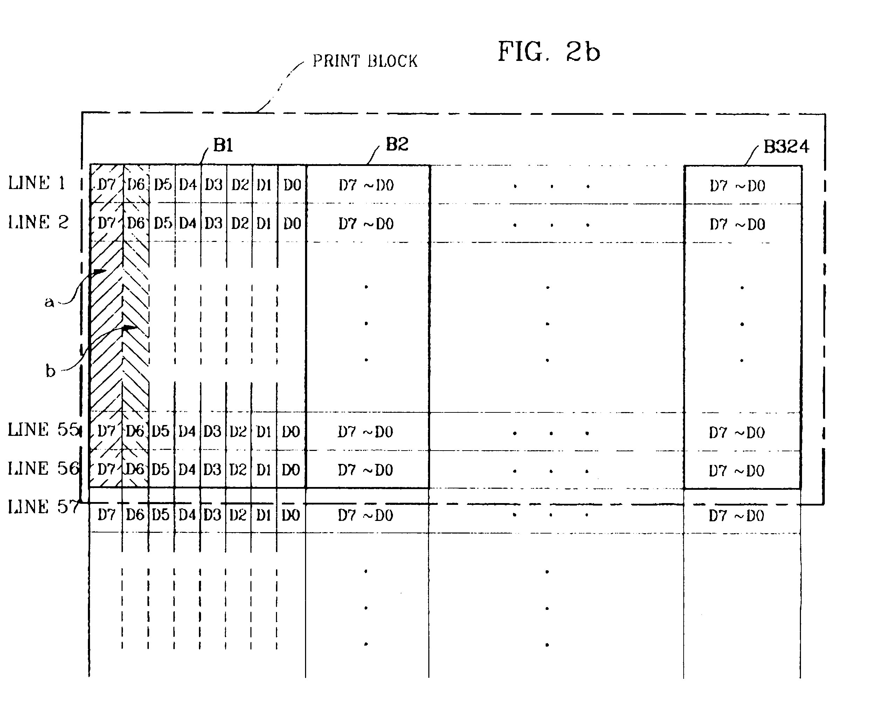

Fig. 2a is a diagram for explaining a conventional horizontal data format organization of a thermal print head printable, for example 324 bytes, namely pixels of 2592 dots across. As shown in Fig. 2, the conventional facsimile device executes the printing operation from first line, second line, and so on through last line in sequence by supplying each print data of 324 bytes to the thermal print head, thus printing print data received from the opposite facsimile device or scanned by the scanner 1.

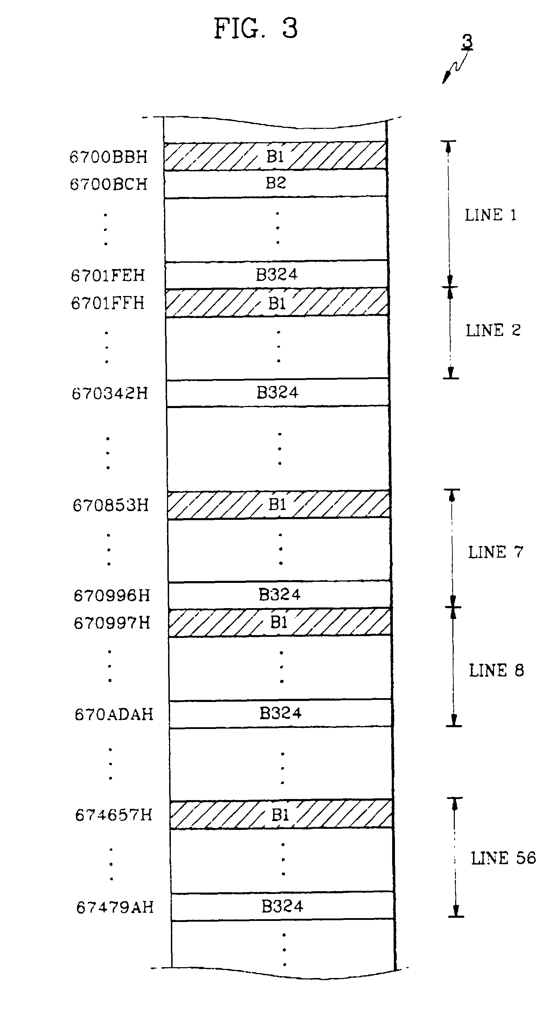

Fig. 3 is a diagram showing a memory map organization of a data memory 3 for storing print data to be transmitted to the thermal print head in sequence of the address. That is, when an initial address where print data are stored is 6700BBH, print data of 324 bytes for printing the first line shown in Fig. 2 are stored in the addresses from 6700BBH through 6701FEH, print data of 324 bytes for printing the second line are stored in the addresses from 6701FFh through 670342H, and so on through print data of 324 bytes for printing the 56th line which are stored in the addresses from 674657H through 674794H in sequence.

In addition, in Fig. 1, CPU 5 reads print data by increasing address data in sequence from the data memory 3 and outputs the read data to the printer 4, thus outputting receive data from the modem 2 or scan data from the scanner 1 in writing.

In the above described facsimile device applying the thermal print head, since thermal sensitive papers, not common papers are used as print papers, it is inconvenient to the user to provide for the thermal sensitive papers separately. Besides, since the thermal sensitive paper is inferior to the common paper in printing quality, and particularly, since it is easily affected by heat essentially, it is very difficult to keep the print papers stable. Therefore, the majority of users reprint the thermal sensitive papers printed with common papers, which cause inconvenience as well.

Accordingly, in consideration of the above problems, laser beam printer, ink jet printer or bubble jet printer have been adapted to facsimile devices so as to output image data onto common papers of high quality. Especially, since the laser beam printer is of very high price, ink jet printer or bubble jet printer have been adapted to facsimile devices increasingly.

However, there are some drawbacks when applying the ink jet or bubble jet printer to the facsimile devices as follows.

In the common facsimile devices applying the thermal print head as described in Fig. 2a, since the printing operations are executed in the unit of horizontal line, image data from the scanner 1 or the modem 2 in Fig. 1 are input in sequence corresponding to the respective print lines and these image data input are stored in the data memory 3 in sequence of address as described in Fig. 3. Here, in the printers applying a vertical format such as an ink jet printer or bubble jet printer, headpins of corresponding print head are arranged vertically against print paper. Thus, where the print head is formed with fifty six headpins, for example, in the vertical direction, it is necessary to supply each seven-byte to the print head in sequence in the vertical direction against the print lines as shown with hatches in Fig. 2b. That is, it is essential to supply print data in the order from a, b, ..., to the print head. Accordingly, it is indispensable to convert the print data format when printing image data of horizontal format by virtue of ink jet or bubble jet printer applying the vertical data format.

Meanwhile, in the conventional art, the converting operations are executed by CPU"s arithmetic, namely in a software manner. That is, CPU reads first data bytes B1 in a first print block, namely first to fifty sixth lines, from the data memory 3, generates print data of seven bytes based on the respective most significant data bits D7, and supplies them to the print head. Subsequently, CPU executes the data converting operations in sequence for the next data bits, D6, D5 and so on through D0, of the respective data bytes B1 and supplies them to the printer head. And these operations are executed against the respective data bytes B2 through B324 of the first through fifty sixth lines, thus completing the printing operations for the first print block. Then, the printing operations for the next print block, namely line 57 to line 112 are executed repeatedly in the same manner described above. Here, to execute the data converting operations described above, CPU first generates address data, namely 6700BBH, 6701FFH ..., 670853H, 670997H, and so on through 674657H corresponding to the byte B1 among the print data for line 1 through line 56, to the data memory 3. Then, CPU reads the byte B1 based on the address data, and converts the read data so as to supply to the printer head.

Subsequently, CPU completes the printing operations for one print block by executing the above operations for the data bytes of B2-B324 in sequence. And these complicated operations of data format conversion are repeated for the next print blocks continuously. Accordingly, the conventional converting operations executed by means of the CPU described above are proved very complicated, and practically, it is very difficult to accomplish software for data converting operations. Moreover, even though the software for data converting operations is accomplished, the complicated processes described above cause a lowering of CPU's operation speed, thus deteriorating print speed of facsimile device remarkably.

Disclosure of Invention

Accordingly, it is an object of the present invention to provide an apparatus for converting print data format which can converts a horizontal data format into a vertical data format by means of hardware configuration.

It is another object of the present invention to provide an apparatus for converting print data format which can convert data at high speed by executing the converting operations in a manner of direct memory access, not affecting the processing speed of CPU.

It is a further object of the present invention to provide an apparatus for converting print data format which facilitates setting up the print data format in accordance with a print head or print engine adapted to facsimile devices.

According to a first aspect of the present invention, there is provided an apparatus for converting print data format which converts a horizontal data format for printing N-byte data per a line horizontally into a vertical data format for printing M-byte data vertically at a time, the apparatus comprising: a data storing means including a first storing area wherein horizontal data are stored in sequence of the address and a second storing area wherein format-converted vertical data are stored; an address generating means for generating read address data for reading K-byte data from the first storing area by adding a source address offset value to predetermined read start address data, the value corresponding to the number of N, and for gerating write address data for writing K-byte data in the second storing area by adding a destination address offset value to predetermined write start address data, the value corresponding to the number of M, during on cycle of DMA operations; a DMA control means, including data format converting means for generating K-byte data to be stored in the second storing area by grouping the K-byte data read from the data memory means in the same bits and a timer for setting the cycle of DMA operations, for outputting a bus request signal to CPU corresponding to a signal output from the timer and for executing the data format converting operations by controlling the address generating means if a bus grant signal is input from CPU; a counting means for outputting an interrupt signal if the number of output times of the bus request signal from the DMA control means becomes M; and a CPU for registering the read start address data, write start address data, source address offset value and destination address offset value and for controlling the driving operations of the timer.

The destination address offset value is set to M/K.

The address generating means comprises a start address storing means for storing read start address data for reading print data from the first storing area and write start address data for writing print data in the second storing area; a first multiplexer for selectively outputting read start address data and write start address data stored in the start address storing means; a counter for increasing read start address data in sequence, output from the first multiplexer; read/write address generating means, including source/destination address offset value storing means, for selectively adding the source/destination address offset values to the read or write address data output from the first multiplexer; and start address setting means for registering the start address data to the start address storing means based on the read/write start address data input through the data bus and the address data output from the counter or the read/write address generating means.

According to the present invention constructed as above, it is possible to lighten the burden of software for converting the horizontal data format into the vertical data format by executing the converting process by virtue of hardware construction.

Further, it is possible to execute the data format converting operations at high speed and to reduce the load of CPU for data conversion through the DMA control means.

Moreover, it is advantageous to accommodate with various printer engines just by changing the source/destination address offset values which are set to the address generating means.

It is to be understood that both the foregoing general description and the following detailed description are exemplary and explanatory and are intended to provide further explanation of the invention as claimed.

Brief Description of Drawings

These and other objects of the present invention will be readily understood with reference to the specification and accompanying drawing, wherein:

FIG. 1 is a block diagram showing a conventional facsimile device;
FIG. 2a and 2b are diagrams for explaining a print data format organization;
FIG. 3 is a memory map showing a print data organization stored in a data memory in a horizontal print manner;
FIG. 4 is a block diagram illustrating an apparatus for converting print data format in accordance with an embodiment of the present invention;
FIG. 5 illustrates operation timings of the apparatus in FIG. 4;
FIG. 6 and 7 are diagrams for explaining the basic conception of the present invention;
FIG. 8 is a circuit diagram showing the configuration of data format converting part 72 in FIG. 4;
FIG. 9 is a diagram for explaining the operations of data format conversion in FIG. 8;
FIG. 10 is a memory map showing a print data organization stored in the data memory after converted in accordance with the present invention;
Fig. 11 is a block diagram showing the configuration of an address generating part 6C in FIG. 4;
Fig. 12 is a circuit diagram showing the configuration of a start address storing part 600 in FIG. 4;
Fig. 13 is a block diagram showing the configuration of a read/write address generating part 750 in FIG. 4; and
Fig. 14 illustrates operation timings for explaining the operations of the apparatus for converting data format in accordance with the present invention.
Fig. 15 is a block diagram showing the configuration of an apparatus for converting print data format in accordance with another embodiment of the present invention.

Best Mode for Carrying Out the Invention

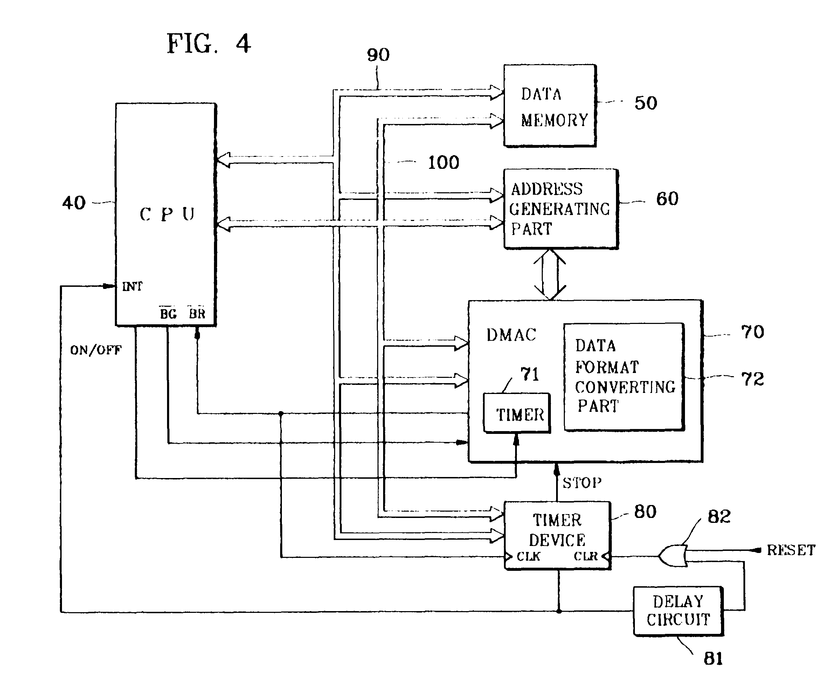

Reference will now be made in detail to the preferred embodiments of the present invention, examples of which are illustrated in the accompanying drawings.
Now, referring to FIG. 4, a block diagram illustrating an apparatus for converting print data format in accordance with an embodiment of the present invention, CPU 40 controls the overall facsimile device. A data memory 50 includes a a first storing area wherein horizontal data are stored in sequence of the address and a second storing area wherein format-converted vertical data are stored. An address generating part 60 generates read address data and write address data for data memory 50 based on predetermined data values, such as read start address data value, write start address data value, source address offset value and destination address offset value, and various control signals output from DMA controller 70, described below. DMA controller 70, controlling the operations of DMA for the data memory 50, comprises a timer 71 for generating timing signals for DMA operations and a data format converting part 72 for converting data of conventional, horizontal data format read from the data memory 50 into data of vertical print format to be printed. A timer device 80, wherein a clock signal input port CK couples a bus request signal $\overline{BR}$ output from the DMA controller 70, counts the number of output times of the bus request signal $\overline{BR}$. The timer device 80 including a register for storing counted values outputs a count termination signal of high level when the counted value of the bus request signal $\overline{BR}$ reaches to the counted value. The count termination signal is input to CPU 40 as an interrupt signal INT. Besides, the timer device 80 stops the DMA controller from driving, by inputting drive stop signal STOP to the DMA controller 70. The count termination signal output from the timer device 80 is connected to an input of OR gate 82 by way of a delay circuit 81 configured by shift register, for example. The OR gate 82 logical-sums the output of the delay circuit 81 and a system reset signal RESET and inputs the result to the timer device 80 as a clear signal. That is, the timer device 80 is constructed to be cleared by the count termination signal output from the corresponding device. Here, CPU 40, data memory 50, address generating part 60, DMA controller 70 and timer device 80 are connected with each other through address bus 90 and data bus 100. The address bus 90 and data bus 100 are controlled by CPU or DMA controller selectively using bus arbiter.

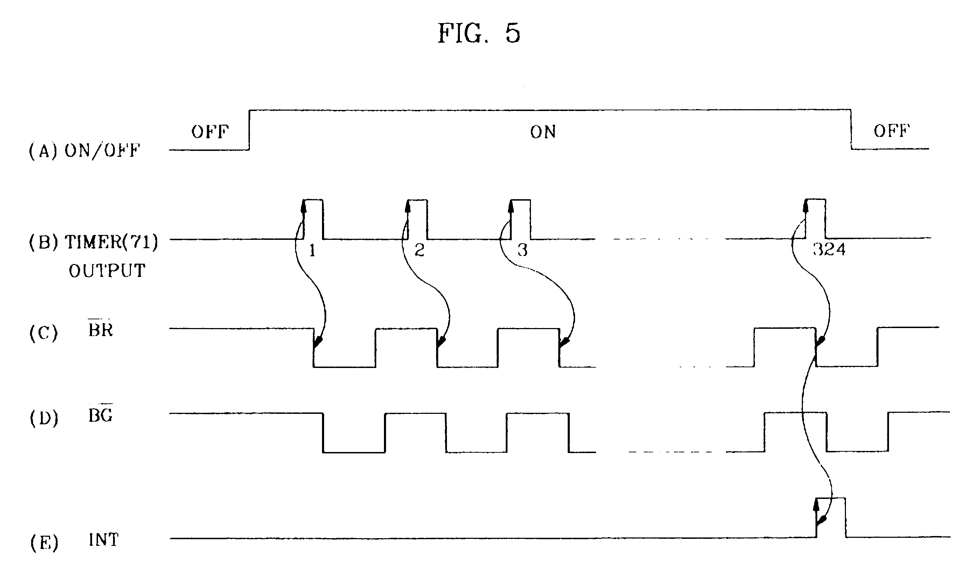

The apparatus for converting print data format constructed as above in accordance with the present invention will be discussed with reference to Fig. 5, Fig. 6 and Fig. 7 hereinafter.

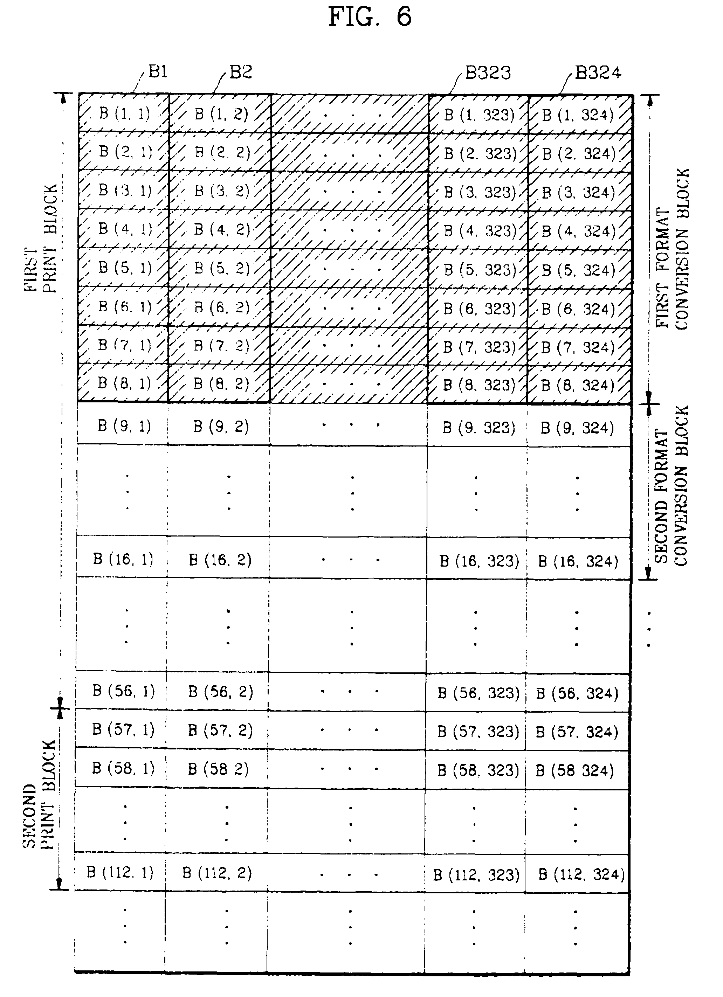

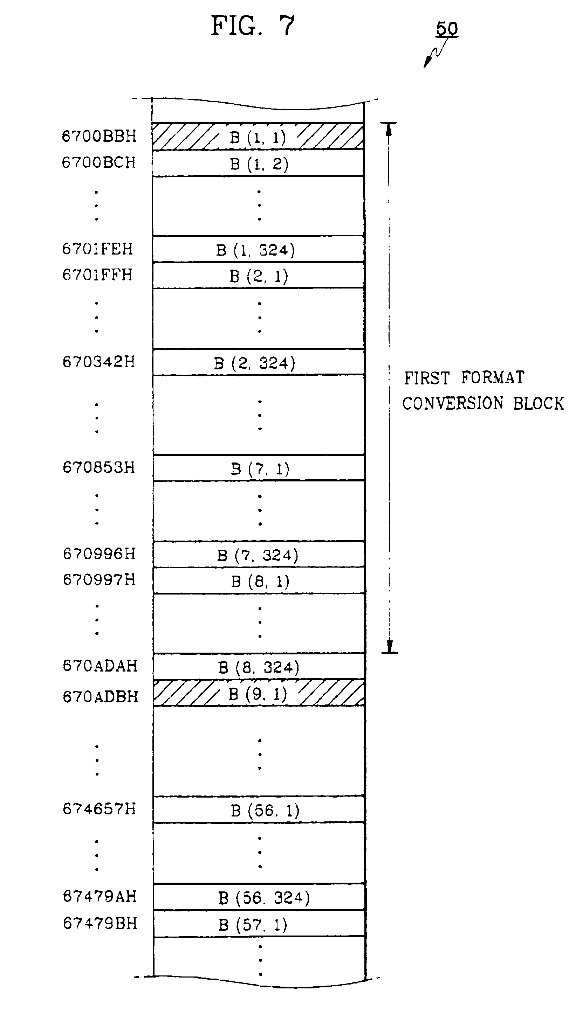

Fig. 5 illustrates operation timings of the apparatus in Fig. 4 and Fig. 6 is a diagram showing a print data format to be converted in accordance with the present invention. As shown in Fig. 6, the amount of print data in the horizontal direction is 324 bytes. And fifty six (7 bytes) headpins of ink jet or bubble jet printer are provided in connection with this example. In Fig. 6, 324 data bytes corresponding to first print line are depicted as B(1,1), B(1,2), and so on through B(1, 324), 324 data bytes corresponding to second print line are depicted as B(2,1), B(2,2), and so on through B(2, 324), and 324 data bytes corresponding to Nth print line are depicted as B(n,1), B(n,2), and so on through B(n, 324). Fig. 7 shows an organization of the respective data bytes, depicted in Fig. 6, being stored in the data memory 50. Here, print data are stored from an address 6700BBH of the data memory 50 in sequence in connection with Fig. 3.

In Fig. 4, the data format converting operations for print data stored in the data memory 50 are executed through the DMA operations by DMA controller 70, these DMA operations are executed according as CPU 40 controls the timer 71 of the DMA controller 70. That is, CPU 40 sets a predetermined data value to the register, provided in the timer 71 of the DMA controller 70, through the address bus 90 and data bus 100. Then, CPU 40 sets an on/off signal ON/OFF to high level as shown in Fig. 5 so as to drive the timer 71 which, then, outputs a pulse signal at predetermined intervals. Subsequently, DMA controller 70 sets the bus request signal $\overline{BR}$ for CPU 4C to low level, corresponding to the rising edges of the pulse signal output from the timer 71. And CPU 40 sets a bus grant signal $\overline{BG}$ to low so as to execute the data format converting operations through the DMA. When the data format converting operations are completed, DMA controller 70 sets the bus request signal $\overline{BR}$ to high level, then, CPU 40 sets the bus grant signal $\overline{BG}$ to high level so as to complete the one cycle of DMA operations. That is, the data value set to the register of the timer 71 corresponds to the time of the one cycle of DMA operations. And the DMA operations described above are executed continuously corresponding to the rising edges of timer output 71. These continuous DMA operations are stopped by the driving stop signal STOP. Besides, DMA controller 70 executes the data format conversion for eight bytes for example, among the print data stored in the memory 50 during the one cycle of DMA operations. That is, DMA controller 70 reads 8-byte data from the data memory 50 so as to execute the data format conversion, and stores the converted 8 bytes data back to the data memory 50. Here, the respective address data for reading and writing from and to the data memory 50 are generated by the address generating part 60.

The address generating part 60 generates read and write address data for the data memory 50 based on predetermined data values, set by CPU 40, such as read start address data value, write start address data value, source address offset value and destination address offset value. Here, the read start address data correspond to first addresses of the respective data format conversion blocks in Fig. 6 and Fig. 7, As shown in Fig. 6 and Fig. 7, the read start address data are depicted as "6700BBH", "670ADBH", and so on. The address generating part 60 generates address data for reading a first format conversion block from B(1,1) to (8,324) based on the read start address data of "6700BBH" and the source address offset value, then, generates address data for reading a second format conversion block from B(9,1) to B(16,324) based on the read start address data of "670ADBH" and the source address offset value, subsequently. The write start address data correspond to first addresses for storing format-converted data again in the data memory 50 in sequence. If the first address for the data memory 50 is "5E7C06H" for example, CPU 40 sets "5E7BFFH" as the write start address by subtracting a destination address offset value "7H", described below, from the first address value.

The read start address data and the write start address data are set by CPU 40, every time the format converting operations for each format conversion block are completed. CPU 40 generates a new read start address data by adding 324x8, that is, "A20H" to the previous read start address data, every time the interrupt signal INT is applied from the timer device 80, and generates a new write start address data by adding "1H" to the previous write start address data.

The source address offset value is set corresponding to the amount of horizontal print data, whereas, the destination address offset value is set corresponding to the configuration of printer head of ink jet printer. As described above, where the amount of horizontal print data, namely the number of data bytes corresponding to one horizontal line is 324, as shown in Fig. 6, the source address offset value is set to 144H $(324 = 1 \times 16^2 + 4 \times 16^1 + 4 \times 16^0)$, namely "0001 0100 0100", and the destination address offset value is set to "7H", namely "0000 0000 0111" where the number of headpins of the printer head in the vertical direction is 56(7 bytes). Moreover, the source address offset value and the destination address offset value are set to a program memory, not depicted, of CPU 40, which are adjusted to proper ones according to various characteristics of printer engine when manufacturing.

The address generating part 60 generates eight read addresses, namely "6700BBH", "6701FFH", ..., "670853H, and "670997H" in a manner that a source address offset value, namely "144H" is added to a read start address data, namely "6700BBH" set by CPU 40 zero to seven times. Accordingly, as shown in Fig. 6 and Fig. 7, B(1,1), data byte of B(2,1), and so on through B(8,1) are read and output fro the data memory 50. Subsequently, the eight byte data read described above are input to the data format converting part 72 of DMA controller 70 so as to be format-converted. And the converted data are written in sequence to the data memory 50 again according to the read address data output from the address generating part 60.

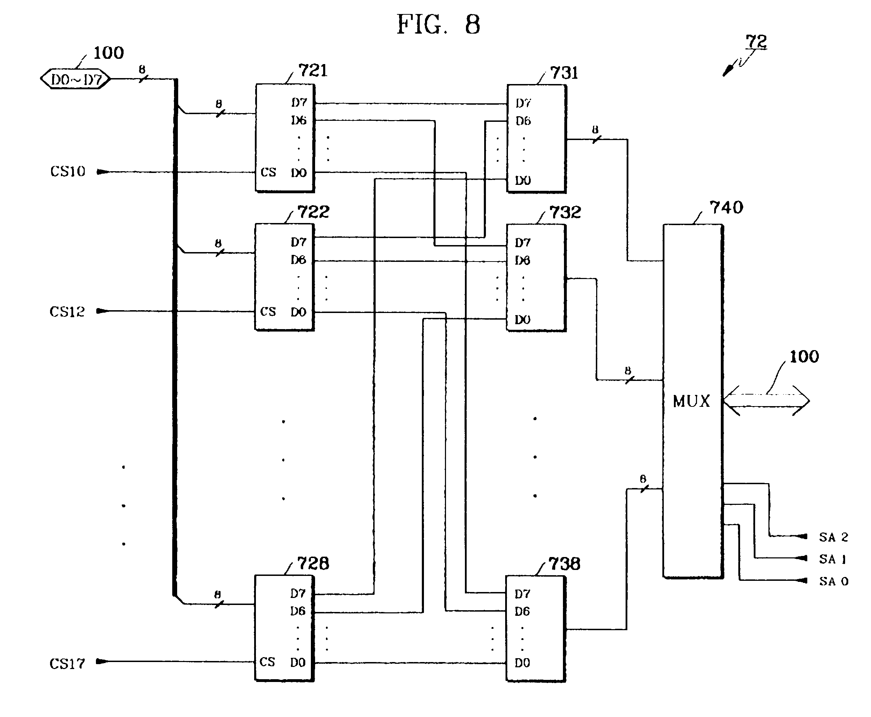

Now referring to Fig. 8, a circuit diagram showing the configuration of data format converting part 72 established in the DMA controller 70, eight registers 721-728 are connected in parallel to data bus 100, the respective registers 721-728 store data on the data bus 100 according to predetermined chip selecting signals CS10-CS17. And each output port of the registers 721-728 are coupled to eight registers 731-738, respectively, for storing input data bit corresponding to the respective registers 721-728. The eight bits output data of the respective register 731-738 are input to a multiplexer 740. Then, the multiplexer 740 outputs the output data of the respective registers 731-738 selectively according to predetermined selecting data SA0-SA2 of three bits.

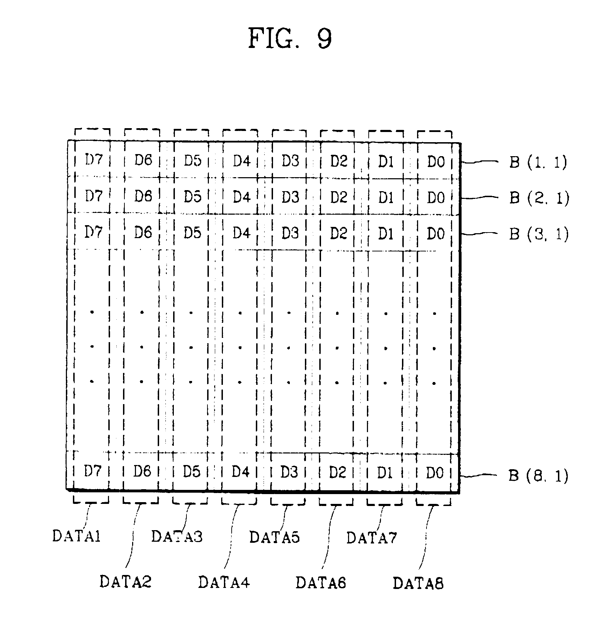

In the configuration of the data format converting part 72 described above, when print data of B1, that is, B(1,1), B(2,1), and so on through B(8,1) are read from the data memory 50, the respective print data are stored in the registers 721-728 in sequence according to the chip selecting signals CS10-CS17. And these data stored in the registers 721-728 are grouped in the same bits and stored in the registers 731-738 again. Accordingly, the multiplex er 740 outputs the data of DATA1, DATA2, and so on through DATA8 format-converted from the data read from the data memory 50, namely B(1,1), B(2,1), and so on through B(8.1) as shown in Fig. 9. Then, the data output from the multiplexer 740 are stored in the data memory 50 according to the write address data output from the address generating part 60. When the data format conversion for the data of B(1,1), B(2,1), B(3,1), and so on through B(8,1) is completed, the address generating part 60 generates a read address data, namely "6700BCH" for the B(1,2) in Fig. 6 and 7, by adding 1 to the read address for the B(1,1). Then, the address generating part 60 reads the data of B(1,2), B(2,2), B(3,2), and so on through B(8,2) from the data memory 50 by generating eight read addresses, namely "6700BBCH", "670200H", ..., 670854H", and "670998H" in a manner that a source address offset value, namely "144H" is added to the read start address data, namely "6700BCH" zero to seven times. In this manner, the address generating part 60 generates address data for reading the respective bytes of B1, B2, and so on through B324 for one format conversion block.

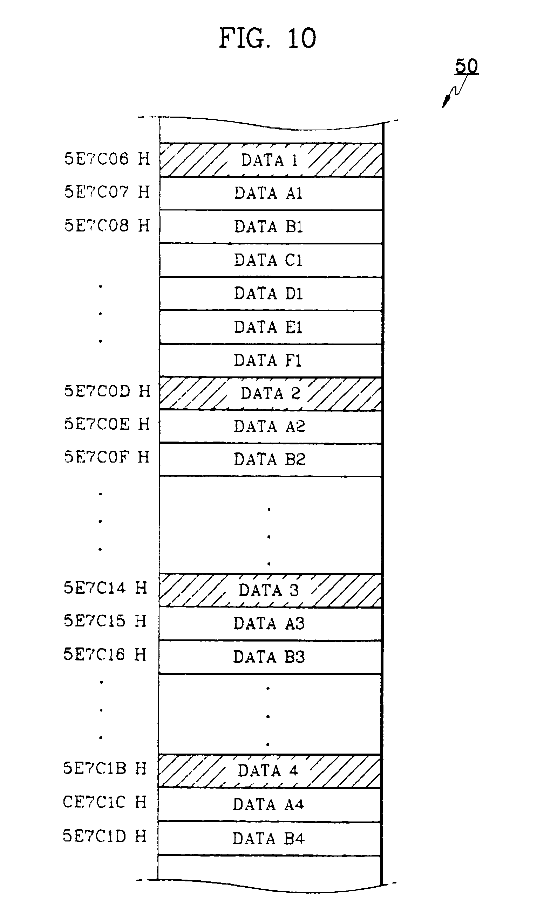

Meanwhile, the address generating part 60 generates write addresses in a manner that a destination address offset value, for example "7H" is added in sequence to the write start address data, for example "5E7BFFH" set by CPU 40. That is, the address generating part 60 generates the write addresses of "5E7C06H", "5E7C0DH", "527C14H", "527C1BH", and so on, by adding "7H" to the write start address data in sequence. Accordingly, the format-converted data in Fig. 9 are written in sequence in the data memory 50 at intervals of "7H" addresses as shown in Fig. 10. Moreover, when the operations of data format conversion described above for the print data from B(1,1) through B(8,324), as shown with hatches in Fig. 6, are completed, that is, when the DMA operations for reading print data in the unit of 8-byte and converting the data formats are executed 324 times, CPU 40 sets the read start address data and write start address data again for the address generating part 60 through the address bus 90 and data bus 100, as described in detail above. Here, CPU 40 sets address data "670ADBH", for reading the print data B(9,1) in Fig. 6, as a read start address data, by adding "A20H" to the read start address data "6700BBH" set previously, and sets address data "ACHE" by adding "1H" to the write start address data set previously, as a write start address data.

Therefore, in this case, the operations of data format conversion for the print data of B(9,1) to B(16,1), B(9,2) to B(16,2), and so on through B(9,324) to B(16, 324) in Fig. 6 are executed. Then, the data format-converted are written in sequence in the data memory 50 as DATA A(DATA A1, DATA A2, ...) as shown in Fig. 10. This way, CPU 40 completes the data format conversion for the first print block by executing the above described operations until it meets the print data B(56,324). Subsequently, when completing the data format conversion for the first print block, the most significant bits D7 of B(1,1) to B(8,1), bits D7 of B(9,1) to B(16,1), bits D7 of B(17,1) to B(24,1), ..., and bits D7 of B(49,1) to B(56,1) are written as DATA 1, DATA A1, DATA B1 ..., and DATA F1, respectively, in sequence corresponding to a series of addresses in the data memory 50, as shown in Fig. 10. Continuously, bits D6 of B(1,1) to B(8,1), bits D6 of B(9,1) to B(16,1), bits D6 of B(17,1) to B(24,1), and so forth are written as DATA 2, DATA A2, DATA B2, and so forth, in the same manner. That is, since a series of data as shown as a, b, ... in Fig. 2 are stored in sequence of the address in the data memory 50, the print data stored in the data memory are read in sequence and output to the printer device, thus executing the printing operations.

Subsequently, when the operations of data format conversion for first print block are completed, the same operations for second print block through the last print block are executed, thus completing the data format conversion for all print data stored in the data memory 50.

Meanwhile, in the above operations, the control of the DMA operations of 324 times is executed by the timer device 80 in Fig. 4. That is, CPU 40 sets a value of "324" for the timer device 80 prior to driving the timer 71 of the DMA controller 70. Then, the timer device 80 counts down the set value at every falling edges of the bus request signal $\overline{BR}$ output from the DMA controller 70, and when the result value becomes "0", an interrupt signal INT of high level is output to CPU 40 as shown in Fig. 5(E). And the signal of high level output from the timer device 80 travels through the delay circuit 81 and OR gate 82 to the timer device 80 back as a clear signal. Then, when the interrupt signal INT of high level is input from the timer device 80, CPU 40 turns off the timer 71 of the DMA controller 70 so as to terminate the DMA operations as shown in Fig. 5(A). That is, when data format conversion for e.g., B(1,1) to B(8,324) is completed, CPU 40 first pauses the operations of the DMA controller 70 and set the initial value for the address generating part 60 and the timer device 80. And, in the same manner described above, the operations of data format conversion for the data memory 50 are executed by driving the timer 71 of the DMA controller 70.

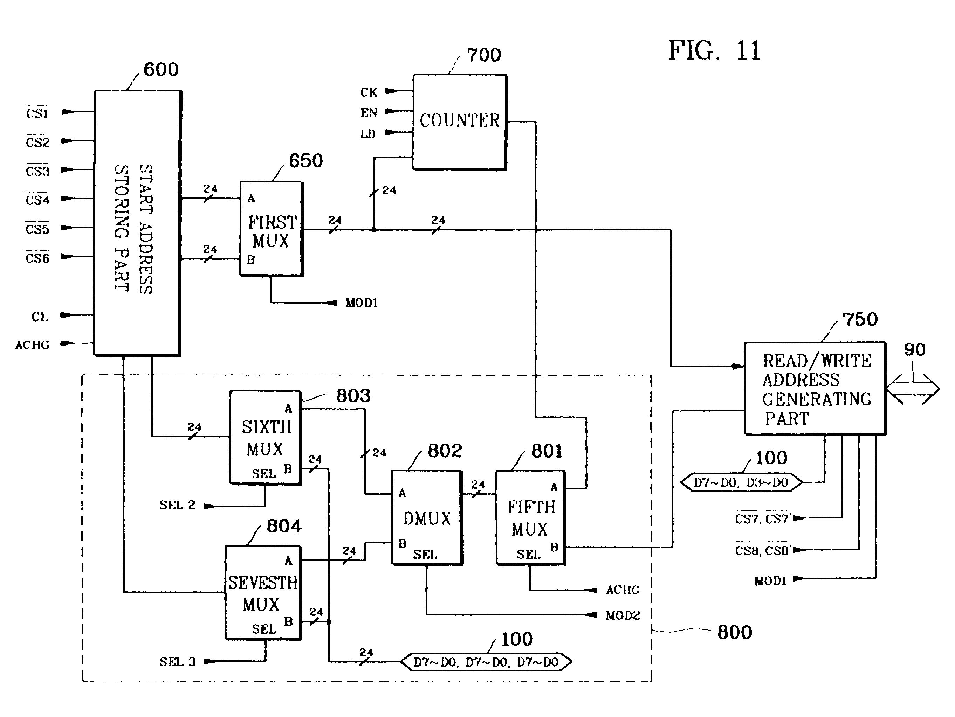

Now, referring to Fig. 11, a block diagram showing the configuration of the address generating part 60, a start address storing part 600 stores read start address data for reading data from the data memory 50 and write start address data for writing the format-converted data back to the data memory 50. The start address storing part 600 further stores start address data output from a start address setting part 800, described below, based on chip selecting signals $\overline{CS1}$ - $\overline{CS6}$, a start address storing signal CL output from the DMA controller 70 and a start address change signal ACHG. And these start address data, such as read start address data and write start address data are coupled to a first multiplexer 650, described below.

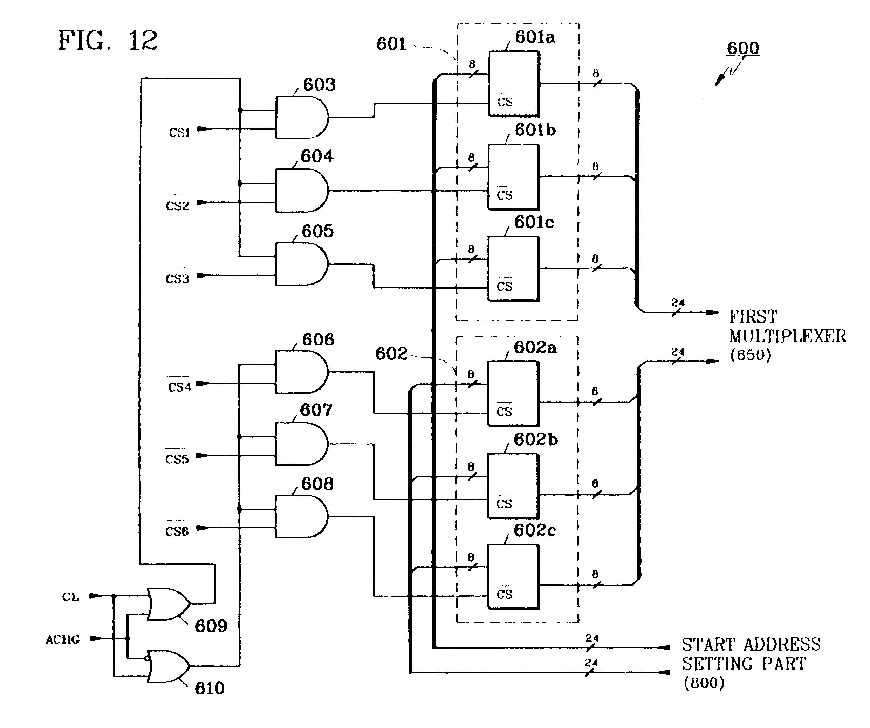

Fig. 12 is a circuit diagram showing the configuration of the start address storing part 600. The start address storing part 600 includes a read start address storing section 601 for storing values of read start address data and a write start address storing section 602 for storing values of write start address data. The read start address storing section 601 and the write start address storing section 602 include predetermined 8-bit registers 601a-601c and 602a-602c, respectively. Each data inputs of them is connected to outputs of a start address setting part 800. The respective chip selecting signal inputs $\overline{CS}$ of the registers 601a-601c and 602a-602c are coupled to outputs of AND gates 603-608. Each one input of the AND gates 603-608 is connected to the chip selecting signals $\overline{CS1}$ - $\overline{CS6}$ output from CPU in Fig. 4, and the other input of the AND gates 603-608 are coupled to outputs of OR gates 609 and 610, respectively. The OR gate 609 receives the start address storing signal CL and start address change signal ACHG output from the DMA controller 70. And the OR gate 610 receives inverted signals of the start address storing signal CL and the start address change signal ACHG.

In Fig. 11, reference numeral 650 denotes a first multiplexer, wherein an A input port and a B input port are connected to the read start address data and write start address data output from the start address storing part 600. The first multiplexer 650 outputs address data input from the A input port and B input port according to a first mode selecting signal MOD1 for selecting a mode from read mode and write mode. That is, if the first mode selecting signal MOD1 is of high level, the multiplexer 650 outputs the read start address data to the A input port, whereas, if the signal MOD1 is of low level, the multiplexer 650 outputs the write start address data to the B input port. And the start addresses output from the first multiplexer 650 are input to a counter 700 and a read/write address generating part 750, described below. A counter 700 counts up the start address data, output from the first multiplexer 650, by one. The counter 700 loads output data of the first multiplexer 650 at a rising edge of a clock signal CK, if a load signal LD becomes high level. And if an enable signal EN becomes high level, the counter 700 counts up the loaded data at the rising edge of the clock signal CK. The counted-up data are applied to a start address setting part 800, described below. Especially, the counter 650 generates the read start address data of B(1,2), B(1,3), and so on through B(1,324) in sequence, if the read start address data is to read the data of B(1,1), for example in Fig. 6, by increasing the read start address data output from the first multiplexer 650, that is, the address data stored in the read start address section 601, by one.

Reference numeral 750 denotes a read/write address generating part for generating read and write addresses for the data memory 50 in Fig. 4 based on the start address data output from the first multiplexer 65. The read/write address generating part 750 generates address data in sequence for reading data of B(1,1), B(2,1), B(3,1) and so on through B(8,1), if the read start address data is to read the data of B(1,1), for example in Fig. 6, in a manner that the source address offset value, "144H" is added, zero to seven times, to the read start address data, output from the first multiplexer 650 in case that the first mode selecting signal MOD1 is of high level, that is in read mode. Whereas, in case that the first mode selecting signal MOD1 is of low mode, that is in write mode, the read/write address generating part 750 generates address data for writing the format-converted data to the data memory 50 by adding a destination address offset value, for example "7H", to the write start address data output from the first multiplexer 650. The source/destination address offset values are set to the read/write address generating part 750 through predetermined chip selecting signals $\overline{CS7}$, $\overline{CS7'}$, $\overline{CS8}$ and $\overline{CS8'}$ and data bus 100.

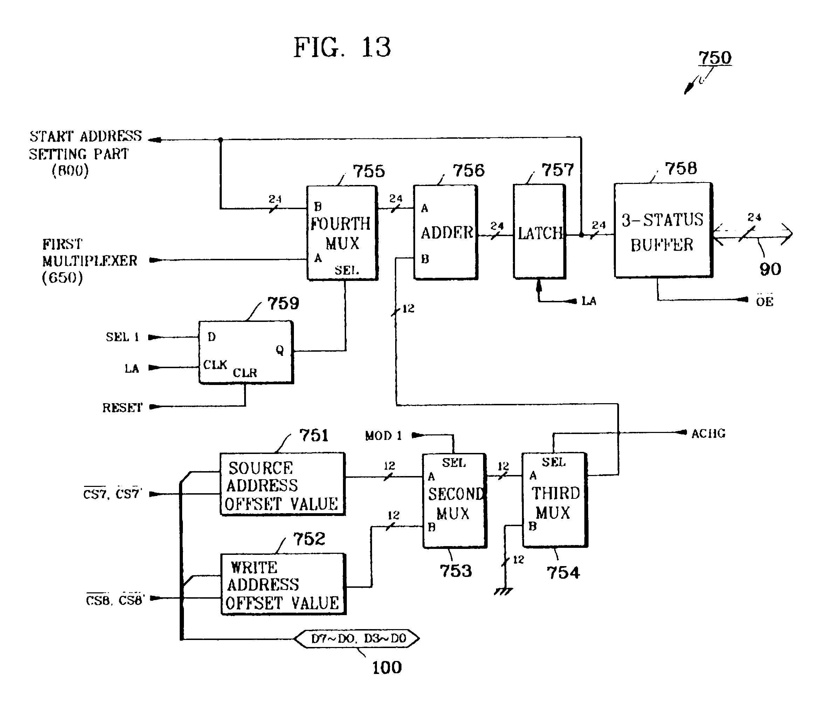

Fig. 13 is a block diagram showing the configuration of the read/write address generating part 750 including registers 751 and 752 for storing source address offset value and destination address offset value of 12-bit, for example, respectively. Each input of the source address offset value register 751 and the destination address offset value register 752 is connected to data bus 100 so as to store and output the data of data bus 100 based on the chip selecting signals $\overline{CS7}$, $\overline{CS7'}$, $\overline{CS8}$ and $\overline{CS8'}$ output from CPU 40. As described above, the source address offset value corresponds to the print data format of horizontal organization, the destination address offset value corresponds to that of vertical organization. Accordingly, where the one print block is 324 bytes across and 7 bytes high as shown in Fig. 2, the source address offset value is set to 144H(324), that is, "0001 0100 0100", and the destination address offset value is set to 007H(7), that is, "0000 0000 0111".

Next, the outputs of the source and destination address offset registers 751 and 752 are coupled to an A and B port of a second multiplexer 753, respectively. The second multiplexer 753 is connected to the first mode selecting signal MOD1 as a selecting signal SEL. If the first mode selecting signal MOD1 is of high level, that is in read mode, the second multiplexer 753 outputs the input data from the source address offset value register 751 connected to the A port. Whereas, if the first mode selecting signal MOD1 is of low level, that is in write mode, the second multiplexer 753 outputs the input data from the destination address offset value register 752 connected to the B port. A third multiplexer 754, wherein an A port is connected to data output from the second multiplexer 753 and a B port is coupled to 12-bit data having a value of "0", outputs the input data of the A port if the selecting signal SEL of high level is input, and outputs the input data of the B port if the selecting signal SEL of low level is input. And the start address change signal ACHG is coupled to the third multiplexer 754 as the selecting signal SEL. A fourth multiplexer 755, wherein an A port is connected to data output from the first multiplexer 650 and a B port is coupled to data output from a latch 757, described below, outputs the input data of the A port if the selecting signal SEL of high level is input, and outputs the input data of the B port if the selecting signal SEL of low level is input. An adder 756 adds the source or destination address data output from the third multiplexer 754 to data output from the fourth multiplexer 755, read or write address data. A latch 757 latches output data of the adder 756 according to a predetermined latch signal LA. A 3-status buffer 758 outputs the latched data of the latch 757 as an address data according to a predetermined output enable signal $\overline{OE}$. A D-flipflop 759, outputting the selecting signal SEL for the fourth multiplexer 755, includes a D input port for receiving a first selecting signal SEL1, a clock input port CLK for the latch signal LA, and a clear port CLR for a predetermined reset signal RESET. The D-flipflop 759 outputs the selecting signal SEL of low level to the fourth multiplexer 755 in the beginning, and outputs the first selecting signal SEL1, input through the D input port at a rising edge of the latch signal LA, as the selecting signal SEL, thereinafter. And the output data of the latch 757 are connected to a start address setting part 800 in Fig. 11.

A start address setting part 800 generates start address data for the start address storing part 600 based on the address data output from the counter 700 and the read/write address generating part 750. The start address setting part 800 comprises a fifth multiplexer 801, a demultiplexer 802, a sixth multiplexer 803 and a seventh multiplexer 804. The fifth multiplexer 801, wherein an A input port receives address data output from the counter 700 and a B input port receives address data output from the read/write address generating part 750, outputs address data of the A input port to the demultiplexer 802, described below, if the start address change signal ACHG is of high level, however, outputs address data of the B input port to the demultiplexer 802 if the start address change signal ACHG is of low level. The demultiplexer 802, connected to the output of the fifth multiplexer 801 and coupled to a second mode selecting signal MOD2 as the selecting signal, outputs the output data of an A port if the second mode selecting signal MOD2 is of high level, however, outputs the out data of a B port if the signal MOD2 is of low level. The sixth multiplexer 803, wherein an A input port is connected to the output data from the A output port of the demultiplexer 802 and a B input port is coupled to data bus 100, outputs the input data of the A port to the start address storing part 600 if the second mode selecting signal MOD2 is of high level, however, outputs the input data of the B port if the signal MOD2 is of low level. The seventh multiplexer 804, wherein an A input port is connected to the output data from the B output port of the demultiplexer 802 and a B input port is coupled to data bus 100, outputs the input data of the A port to the start address storing part 600 if a third selecting signal SEL3 is of high level, however, outputs the input data of the B port if the third selecting signal SEL3 is of low level.

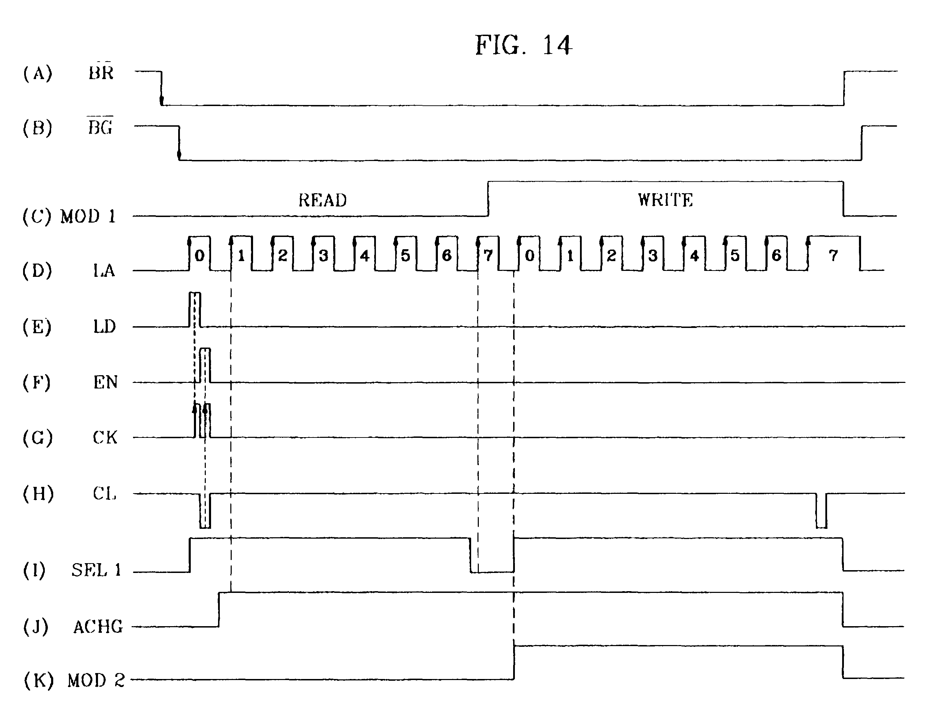

Hereinafter, the operations of the apparatus constructed as above will be discussed with reference to Fig. 14 illustrating operation timings . First, in Fig. 4, if the data memory 50 stores data to be printed, CPU 40 initially sets the read/write address data and source/destination address offset values for the address generating part 60. That is, in Fig. 11 and Fig. 12, CPU 40 outputs the second and third selecting signals SEL2 and SEL3 of low level to the sixth and seventh multiplexers 803 and 804 of the start address setting part 800 so as to output the input data of the B input ports of the sixth and seventh multiplexers 803 and 804 to the start address storing part 600. Then, CPU 40 sets the first to third chip selecting signals $\overline{CS1}$ - $\overline{CS3}$ to low level in sequence and outputs predetermined data in sequence through data bus D0-D7, thus setting the read start address data, for example, "6700BBH" for the registers 601a-601c of the read start address storing section 601. Subsequently, CPU 40 sets the fourth to sixth chip selecting signals $\overline{CS4}$ - $\overline{CS6}$ to low level in sequence and outputs predetermined data in sequence through data bus D0-D7, thus setting the read start address data, for example, "5E7CFFH" for the registers 602a-602c of the read start address storing part 602. Continuously, CPU 40 supplies the chip selecting signals $\overline{CS7}$, $\overline{CS7}'$, $\overline{CS8}$ and $\overline{CS8}'$ to the source/destination address offset value registers 751 and 752 of the read/write address generating part 750, and outputs the source/destination address offset values, for example, 144h, "7H", that is, "0001 0100 0100" and "0000 0000 0111" in sequence through data bus D0-D7, thus setting corresponding offset values to the source address offset value register 751 and the destination address offset value register 752, respectively, in Fig. 11 and Fig 13. Meanwhile, CPU 40 sets the selecting signals for the sixth and seventh multiplexers 803 and 804 in Fig. 11 to high level so as to output data from the multiplexer 802, that is data of A input ports of the sixth and seventh multiplexers 803 and 804, to the start address storing part 600. Besides, CPU 40 sets data value, for setting the times of DMA operations for the timer device 80 in Fig. 4, through address bus 90 and data bus 100 to "324" for example.

Next, if the initial data setting for the address generating part 60 and the timer device 80 is completed, CPU 40 sets predetermined timing data for the timer 71 of the DMA controller 70 as discussed in Fig. 4 and Fig. 5, and sets the on/off signals ON/OFF to high level, thus driving the timer 71. Then, if the output level from the timer 71 becomes high according as the timer 71 is driven, the DMA controller 70 outputs the bus request signal $\overline{BR}$ to CPU 40 as shown in Fig. 14(A), and if the bus grant signal $\overline{BG}$ is input from CPU 40, the DMA controller 70 controls the address generating part 60, thus executing the operations of data format conversion.

In Fig. 11 and Fig. 14, since the first mode selecting signal MOD1 is set to low in the beginning, the read start address data output from the start address storing part 600 is output through the first multiplexer 650 to the counter 700 and the read/write address generating part 750. As shown in Fig. 14(E)-(G), the counter 700 loads the read start address data output from the first multiplexer 650, when the clock signal CK is input in the preset state that the load signal is of high level. Then, the counter 700 outputs "6700BCH" by increasing the loaded read start address data, that is "6700BBH" by one, when the clock signal CK is input in the present state that the enable signal EN is of high level. And the output data of the counter 700 is coupled to the A input port of the fifth multiplexer 801 of the start address setting part 700.

Here, in the start address setting part 800, as shown in Fig. 14(J)-(K), since the start address change signal ACHG and the second mode selecting signal MOD2 are set to low and the second selecting signal SEL2 is set to high, the output data of the counter 700 is input through the fifth multiplexer 801, demultiplexer 802 and sixth multiplexer 803 to the start address storing part 600.

Besides, in the start address storing part 600 of Fig. 12, as shown in Fig. 14(H)-(J), since the start address storing signal CL and the start address change signal ACHG are set to low and the chip selecting sig-

nals $\overline{CS}$ are input to the respective registers 601a-601c of the read start address storing section 601, the output data of the counter 700, that is "6700BCH" is written in the read start address storing section 601 as a new read start address data.

Meanwhile, in the read/write address generating part 750 of Fig. 13, since the output of the D-flipflop 759 and the start address change signal ACHG are set to low, in the present state that the read start address data, "6700BBH", is output from the first multiplexer 650, the third and fifth multiplexer 754 and 755 output the input data of the B ports, respectively, as output data. Accordingly, the address data output from the first multiplexer 650 is input through the fourth multiplexer 755 and the adder 756 to the latch 757. The latch 757 latches address data input at rising edges of the latch signal LA as shown in Fig. 14(D). And the 3-status buffer 758 outputs address data, latched by the latch 757 based on predetermined output enable signal $\overline{OE}$, through address bus 90. That is, in the beginning stage of the operations, CPU 40 outputs the read start address data, "6700BBH", stored in the start address storing part 600, through address bus 90 so as to read the print data B (1,1) in Fig. 6 and Fig. 7 as described in detail above.

Meanwhile, during the operations described above, if the latch signal LA for the latch 757 rises high, the D-flipflop 759 outputs a signal, coupled to an input port D, through an output port Q at each rising edge. Here, since the first selecting signal SEL1 connected to the input port D of the D-flipflop 759 is set to high as shown in Fig. 14(I), a high level selecting signal SEL is input to the fourth multiplexer 755. Further, since the start address change signal ACHG is set to high again after storing the output data of the counter 700 to the start address storing part 600, a high level selecting signal SEL is input to the third multiplexer 754 as well. Accordingly, the fourth multiplexer 755 outputs the A input port data, that is, the address data generated previously by the latch 757, and the third multiplexer 754 outputs the data from the second multiplexer 753. And here, since the first mode selecting signal MOD1 is set to low and the second multiplexer 753 outputs the source address offset value stored in the register 751, the third multiplexer 754 outputs the source address offset value in the end.

Moreover, since the output data from the third and fourth multiplexers 754 and 755 are output through the adder 756, the latch 757 outputs address data increased as much as the source address offset value added at each rising edge of the latch signal LA. That is, in the preferred embodiment in accordance with the present invention, as the source address offset value is set to 324(144H), the print data of B(1,1), B(2,1), B(3,1), and so on through B(8,1) are read from the data memory 50 and output through data bus 100 in Fig. 6 and Fig. 7. Then, the 8-byte data read from the data memory 50 are input to the data format converting part 72 of the DMA controller 70 so as to be format-converted, and written again in the data memory 50 corresponding to the write address generated by the address generating part 60.

As shown in Fig. 14(D) and 14(I), since the first selecting signal SEL1 is set to low at the eighth rising edge of the latch signal LA, the output of the D-flipflop 759 becomes low at eighth edge of the latch LA, thus making the fourth multiplexer 755 output data of the B input port. And, as shown in Fig. 14(C) and 14(K), if the eighth latch signal LA is output, the first and second mode selecting signals MOD1 and MOD2 rise high. That is, the address generating part 60 is set to be in write mode. Here, since the first multiplexer 650 outputs the input data of the B port in Fig. 11, the first multiplexer 650 outputs the write start address data of the start address setting part 600, and the second multiplexer 753 of the read/write address generating part 750 generates the source address offset value stored in the register 752. Besides, in the start address setting part 800, the fifth multiplexer 801 inputs the input data of the B port, that is, the address data output from the read/write address generating part 750 to the demultiplexer 802.

If the write start address data from the first multiplexer 650 is input to the read/write address generating part 750 as described above, the address data is input to the adder 756 through the fourth multiplexer 755 in Fig. 13 and added to the source address offset value from the third multiplexer 754 so as to be input to the latch 757. The latch 757 latches the write address data input at the rising edges in Fig. 14(D) and outputs to the 3-status buffer 758, which, then, outputs the write address data through address bus 90 according to a predetermined output enable signal $\overline{OE}$. That is, in the beginning stage of the operations in write mode, CPU 40 outputs data of "5E7C06H" by adding the destination address offset value, "7H" to the write start address data, "5E7BFFH" stored in the start address storing part 600, so as to write the format-converted data DATA1 to the address "5E7C06H" in the data memory 50 as described with reference to Fig. 9 and Fig. 10. Next, if the latch signal LA is output and the first selecting signal SEL1 is set to high a shown in Fig. 14(I), the output Q of the D-flipflop 759 is set to high at the rising edges of the latch signal LA. Accordingly, the fourth multiplexer 755 outputs the input data of the A port, that is, the address data generated previously by the latch 757. Thereafter, the address data latched by the latch 757 is added to the output data of the third and fourth multiplexers 754 and 755, that is, the destination address offset value by the adder 756, and accordingly, the latch 757 outputs address data increased as much as the destination address offset value added at each rising edge of the latch signal LA. That is, in the preferred embodiment in accordance with the present invention, as the destination address offset value is set to "7H", the format-converted data of DATA1, DATA2, and so on through DATA8 are written in the data memory 50 at intervals of "7H" addresses as shown in Fig. 9 and Fig. 10.

If the eighth latch signal LA is output in write mode, the start address storing signal CL becomes low as shown in Fig. 14(H). Here, since the second mode selecting signal MOD2 is of high level, the eighth write address data latched by the latch 757 in input through the fifth multiplexer 801, the demultiplexer 802 and the seventh multiplexer 804 of the start address setting part 800 to the start address storing part 600 in Fig. 11. Besides, since the start address change signal ACHG is set to high, the write address data output from the seventh multiplexer 804 is written in the write start address register 602. That is, in Fig. 9 and Fig. 10, the address data for storing the eighth data DATA8 format-converted is registered as the write start address data for the next data format converting operations. If the data format converting operations for the 8-byte data of B(1,1), B(2,1), and so on through B(8,1) are completed, the DMA controller 70 sets the bus request signal $\overline{BR}$ to high as shown in Fig. 14(A), and CPU 40 sets the bus grant signal $\overline{BG}$ to high as shown in Fig. 14(B), thus completing the first DMA operations. And, if the high level signal is output again from the timer 71, as discussed in Fig. 4 and Fig. 5, the DMA controller 70 outputs the bus request signal $\overline{BR}$ to CPU 40, and CPU 40 outputs the bus grant signal $\overline{BG}$, thus executing the next DMA operations. Here, since the operations for data format conversion are executed from the start address, that is, the address data set during the previous DMA operations, the data format conversion for B(1,2), B(2,2), and so on through B(8,2) in Fig. 6 is executed during the second DMA operations. In such a manner, if the data format conversion for B(1,324), B(2, 324), and so on through B(8,324) is completed, the interrupt signal INT is output from the timer device 80 as discussed in Fig. 4 and Fig. 5, and CPU sets the read/write start address data for the address generating part 60 again and sets a predetermined value for the timer device 80. Then, the data format converting operations for the next print data, that is, from B(9,1) to B(16,324) are executed by driving the timer 71 of the DMA controller 70. In such a manner, the overall converting operations are completed consequently.

According to the embodiment of the present invention described above, it is possible to lighten the burden of software for converting the horizontal data format into the vertical data format by executing the converting process by virtue of hardware construction.

Further, it is possible to execute the data format converting operations at high speed and to reduce the load of CPU for data format conversion through the DMA operations of the DMA controller 70.

Moreover, it is advantageous to accommodate with various printer engines just by changing the source/destination address offset values which are set to the address generating part 60.

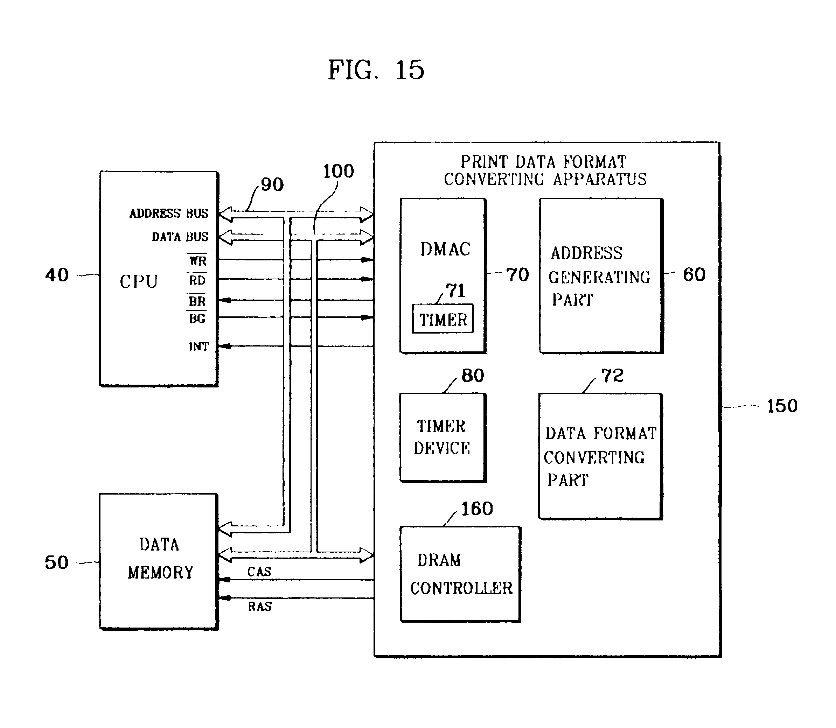

Now referring to Fig. 15, a block diagram showing the configuration of an apparatus for converting print data format in accordance with another embodiment of the present invention, which configures the address generating part 60, DMA controller 70, timer device 80, etc., in a device using, for example, gate array or application specific IC (ASIC). When referring to FIG. 15, similar parts to those identified in Fig. 4 use the same reference numerals. In Fig. 15, a print data format converting apparatus 150 comprises the address generating part 60, DMA controller 70, timer 71, data format converting part 72 and timer device 80. The respective component parts have the same configuration and function with those in Fig. 4. DRAM controller 160 generates a row address strobe signal RAS and a column address strobe signal CAS and refreshes corresponding data memory 50. The component parts are interconnected through address bus and data bus, not depicted. The DMA controller 70 controls the operations of data format conversion by supplying various timing signals in Fig. 14 to the address generating part 60. And CPU 40 loads read/write start address data and source/destination address offset values to the address generating part 60 through address bus 90 and data bus 100 and drives the timer 71 and the timer device 80, thus executing the operations of print data format conversion. Here, CPU 40 can be properly programmed for the format conversion according to various printer engines.

In the above configuration, since the apparatus for converting print data format is configured in a device, corresponding apparatus can be readily applied to various printers or facsimile devices.

Moreover, since the operations of format conversion are executed by the read/write start address data and the source/destination address offset values loaded by the address generating part 60, the data format conversion appropriate for various printer engines can be established by programming CPU connected through data bus 90 and address bus 100 to the above print data format converting apparatus 160.

It will be apparent to those skilled in the art that various modifications and variations can be made in an apparatus for converting print data format of the present invention without deviating from the spirit or scope of the invention. It is intended that the present invention cover the modifications and variations of this invention provided they come within the scope of the appended claims and their equivalents.

**Claims**

1. An apparatus for converting print data format which converts a horizontal data format for printing N-byte data per a line horizontally into a vertical data format for printing M-byte data vertically at a time, the apparatus comprising:

   a data storing means including a first storing area wherein horizontal data are stored in sequence of the address and a second storing area wherein format-converted vertical data are stored;

   an address generating means for generating read address data for reading K-byte data from the first storing area by adding a source address offset value to predetermined read start address data, the value corresponding to the number of N, and for generating write address data for writing K-byte data in the second storing area by adding a destination address offset value to predetermined write start address data, the value corresponding to the number of M, during on cycle of DMA operations;

   a DMA control means, including data format converting means for generating K-byte data to be stored in the second storing area by grouping the K-byte data read from the data memory means in the same bits and a timer for setting the cycle of DMA operations, for outputting a bus request signal to CPU corresponding to a signal output from the timer and for executing the data format converting operations by controlling the address generating means if a bus grant signal is input from CPU;

   a counting means for outputting an interrupt signal if the number of output times of the bus request signal from the DMA control means becomes M; and

   a CPU for registering the read start address data, write start address data, source address offset value and destination address offset value and for controlling the driving operations of the timer.

2. An apparatus for converting print data format as recited in claim 1, wherein the destination address offset value is set to M/K.

3. An apparatus for converting print data format as recited in claim 1, wherein the address generating means comprising:

   a start address storing means for storing read start address data for reading print data from the first storing area and write start address data for writing print data in the second storing area;

   a first multiplexer for selectively outputting read start address data and write start address data stored in the start address storing means;

   a counter for increasing read start address data in sequence, output from the first multiplexer;

   a read/write address generating means, including source/destination address offset value storing means, for selectively adding the source/destination address offset values to the read or write address data output from the first multiplexer; and

   a start address setting means for registering the start address data to the start address storing means based on the read/write start address data input through the data bus and the address data output from the counter or the read/write address generating means.

4. An apparatus for converting print data format as recited in claim 1, wherein the data format converting means comprising:

a plurality of first registers, wherein each input port is connected to data bus, for storing data input from the data bus based on predetermined selecting signals, and for outputting the data;
a plurality of second registers, wherein each input port is connected to each output port having the same bit of the first registers, for storing data input from the first registers based on predetermined selecting signals, and for outputting the data; and
a multiplexer for selectively connecting the output of the second registers based on predetermined selecting signals to the data bus.

5. An apparatus for converting print data, having ports for connecting data bus with address bus, comprising:

an address generating means, including a storing means for storing read/write start address data and source/destination address offset values input from the data bus, for generating read/write addresses based on data stored in the storing means according to predetermined control signals;
a data format converting means for grouping data of predetermined bytes, read by the read address data generated from the address generating means, in the same bits;
a DMA control means, including a timer for setting the cycle of DMA operations, for outputting a bus request signal correponding to the output signal from the timer, and for controlling the address generating means and the data format converting means if a bus grant signal is input so as to execute the operations of data format conversion; and
a counting means, including a storing means for storing times of the DMA cycles to be executed, for counting the output times of the bus request signal and outputting a DMA termination signal if the counted value becomes the stored times of the DMA cycle.

6. An apparatus for converting print data format as recited in claim 5, the apparatus further comprising a memory control means for controlling the memory connected to the address bus and data bus.

7. An apparatus for converting print data format as recited in claim 5, wherein the address generating means comprising:

a start address storing means for storing read/write start address data output through the data bus;
a first multiplexer for selectively outputting read/write start address data stored in the start address storing means;
a counting means for increasing the read start address data in sequence output from the first multiplexer;
a read/write address generating means, including source/destination address offset value storing means, for selectively adding the source/destination address offset values to the read or write address data output from the first multiplexer; and
a start address setting means for registering start address data in the start address storing means based on the read/write start address data input through the data bus and address data output from the counter or the read/write address generating means.

8. An apparatus for converting print data format as recited in claim 5, wherein the data format converting means comprising:

a plurality of first registers, wherein each input port is connected to data bus, for storing data input from the data bus based on predetermined selecting signals, and for outputting the data;
a plurality of second registers, wherein each input port is connected to each output port having the same bit of the first registers, for storing data input from the first registers based on predetermined selecting signals, and for outputting the data; and
a multiplexer for selectively connecting the output of the second registers based on predetermined selecting signals to the data bus.

# FIG. 1

## < PRIOR ART >

1 — SCANNER

5 — C P U

DATA MEMORY

RECEIVE DATA STORING PART
3a

SCAN DATA STORING PART
3b

3

2 MODEM → PSTN

PRINTER
4

EP 0 967 784 A2

# FIG. 2a

| | B1 | | | | | | | | B2 | | | B324 |
|---|---|---|---|---|---|---|---|---|---|---|---|---|
| LINE 1 | D7 | D6 | D5 | D4 | D3 | D2 | D1 | D0 | D7 ~ D0 | · · · | | D7 ~ D0 |
| LINE 2 | D7 | D6 | D5 | D4 | D3 | D2 | D1 | D0 | D7 ~ D0 | · · · | | D7 ~ D0 |
| LINE 55 | D7 | D6 | D5 | D4 | D3 | D2 | D1 | D0 | D7 ~ D0 | · · · | | D7 ~ D0 |
| LINE 56 | D7 | D6 | D5 | D4 | D3 | D2 | D1 | D0 | D7 ~ D0 | · · · | | D7 ~ D0 |
| LINE 57 | D7 | D6 | D5 | D4 | D3 | D2 | D1 | D0 | D7 ~ D0 | · · · | | D7 ~ D0 |

FIG. 2b

# FIG. 3

3

| Address | Block | Line |
|---|---|---|
| 6700BBH | B1 | LINE 1 |
| 6700BCH | B2 | |
| : | : | |
| 6701FEH | B324 | |
| 6701FFH | B1 | LINE 2 |
| : | : | |
| 670342H | B324 | |
| : | : | |
| 670853H | B1 | LINE 7 |
| : | : | |
| 670996H | B324 | |
| 670997H | B1 | LINE 8 |
| : | : | |
| 670ADAH | B324 | |
| : | : | |
| 674657H | B1 | LINE 56 |
| : | : | |
| 67479AH | B324 | |
| : | : | |

FIG. 4

FIG. 5

(A) ON/OFF    OFF    ON    OFF

(B) TIMER(71)
    OUTPUT    1    2    3    324

(C)   $\overline{BR}$

(D)   $\overline{BG}$

(E)   INT

EP 0 967 784 A2

## FIG. 6

| | B1 | B2 | | B323 | B324 |
|---|---|---|---|---|---|
| FIRST PRINT BLOCK | B (1, 1) | B (1, 2) | · · · | B (1, 323) | B (1, 324) |
| | B (2, 1) | B (2, 2) | · · · | B (2, 323) | B (2, 324) |
| | B (3, 1) | B (3, 2) | · · · | B (3, 323) | B (3, 324) |
| | B (4, 1) | B (4, 2) | · · · | B (4, 323) | B (4, 324) |
| | B (5, 1) | B (5, 2) | · · · | B (5, 323) | B (5, 324) |
| | B (6, 1) | B (6, 2) | · · · | B (6, 323) | B (6, 324) |
| | B (7, 1) | B (7, 2) | · · · | B (7, 323) | B (7, 324) |
| | B (8, 1) | B (8, 2) | · · · | B (8, 323) | B (8, 324) |
| | B (9, 1) | B (9, 2) | · · · | B (9, 323) | B (9, 324) |
| | : | : | : | : | : |
| | B (16, 1) | B (16, 2) | · · · | B (16, 323) | B (16, 324) |
| | : | : | : | : | : |
| SECOND PRINT BLOCK | B (56, 1) | B (56, 2) | · · · | B (56, 323) | B (56, 324) |
| | B (57, 1) | B (57, 2) | · · · | B (57, 323) | B (57, 324) |
| | B (58, 1) | B (58, 2) | · · · | B (58, 323) | B (58, 324) |
| | : | : | : | : | : |
| | B (112, 1) | B (112, 2) | · · · | B (112, 323) | B (112, 324) |
| | : | : | : | : | : |

FIRST FORMAT CONVERSION BLOCK

SECOND FORMAT CONVERSION BLOCK

# FIG. 7

50

| Address | Block |
|---|---|
| 6700BBH | //// B (1, 1) //// |
| 6700BCH | B (1, 2) |
| ⋮ | ⋮ |
| 6701FEH | B (1, 324) |
| 6701FFH | B (2, 1) |
| ⋮ | ⋮ |
| 670342H | B (2, 324) |
| ⋮ | ⋮ |
| 670853H | B (7, 1) |
| ⋮ | ⋮ |
| 670996H | B (7, 324) |
| 670997H | B (8, 1) |
| ⋮ | ⋮ |
| 670ADAH | B (8, 324) |
| 670ADBH | //// B (9, 1) //// |
| ⋮ | ⋮ |
| 674657H | B (56, 1) |
| ⋮ | ⋮ |
| 67479AH | B (56, 324) |
| 67479BH | B (57, 1) |
| ⋮ | ⋮ |

FIRST FORMAT
CONVERSION BLOCK

# FIG. 8

EP 0 967 784 A2

## FIG. 9

| D7 | D6 | D5 | D4 | D3 | D2 | D1 | D0 | — B (1. 1) |
| D7 | D6 | D5 | D4 | D3 | D2 | D1 | D0 | — B (2. 1) |
| D7 | D6 | D5 | D4 | D3 | D2 | D1 | D0 | — B (3. 1) |

.
.
.

| D7 | D6 | D5 | D4 | D3 | D2 | D1 | D0 | — B (8. 1) |

DATA1    DATA3    DATA5    DATA7

DATA2    DATA4    DATA6    DATA8

# FIG. 10

50

| | |
|---|---|
| 5E7C06 H | DATA 1 |
| 5E7C07 H | DATA A1 |
| 5E7C08 H | DATA B1 |
| | DATA C1 |
| . | DATA D1 |
| . | DATA E1 |
| . | DATA F1 |
| 5E7C0D H | DATA 2 |
| 5E7C0E H | DATA A2 |
| 5E7C0F H | DATA B2 |
| . | |
| . | . |
| . | . |
| | . |
| 5E7C14 H | DATA 3 |
| 5E7C15 H | DATA A3 |
| 5E7C16 H | DATA B3 |
| . | . |
| . | . |
| . | . |
| 5E7C1B H | DATA 4 |
| CE7C1C H | DATA A4 |
| 5E7C1D H | DATA B4 |

FIG. 11

# FIG. 12

EP 0 967 784 A2

# FIG. 13

750

START ADDRESS
SETTING PART
(800)

FIRST
MULTIPLEXER
(650)

755 FOURTH MUX

756 ADDER

757 LATCH

758 3-STATUS BUFFER

90

OE

LA

759

SEL 1 — D

LA — CLK   CLR   Q

RESET

MOD 1

ACHG

751 SOURCE ADDRESS OFFSET VALUE

$\overline{CS7}$, CS7

752 WRITE ADDRESS OFFSET VALUE

$\overline{CS8}$, CS8

753 SECOND MUX

754 THIRD MUX

D7~D0, D3~D0

100

# FIG. 14

(A) BR

(B) BG

(C) MOD 1   READ   WRITE

(D) LA   0 1 2 3 4 5 6 7 0 1 2 3 4 5 6 7

(E) LD

(F) EN

(G) CK

(H) CL

(I) SEL 1

(J) ACHG

(K) MOD 2

EP 0 967 784 A2

EP 0 967 784 A2

# FIG. 15

Block diagram showing CPU (40) with ADDRESS BUS, DATA BUS, WR, RD, BR, BG, INT connected via 90 and 100 to PRINT DATA FORMAT CONVERTING APPARATUS (150), containing DMAC (70) with TIMER (71), ADDRESS GENERATING PART (60), TIMER DEVICE (80), DATA FORMAT CONVERTING PART (72), and DRAM CONTROLLER (160). DATA MEMORY (50) connected via CAS and RAS.